# EUROPÄISCHE PATENTSCHRIFT

(11) **EP 2 722 495 B1**
(45) Veröffentlichungstag und Bekanntmachung des Hinweises auf die Patenterteilung: **11.03.2015**
(21) Anmeldenummer: 13188647.5
(22) Anmeldetag: 15.10.2013
(51) Int. Cl.: F01D 25/24, F01D 25/26, F02C 6/12, F01D 25/00, F02B 37/02

(54) **Gaseintrittsgehäuse und zugehörige Abgasturbine**
Gas entry housing and corresponding exhaust gas turbine
Carter d'entrée de gaz et turbine associée pour gaz d'échappement

(30) Priorität: 17.10.2012 EP 12188843
(43) Veröffentlichungstag der Anmeldung: 23.04.2014
(73) Patentinhaber: ABB Turbo Systems AG, 5400 Baden (CH)
(72) Erfinder: Oeschger, Daniel, 5430 Wettingen (CH); Städeli, Markus, 8005 Zürich (CH); Barreiro, Patrizia, 5417 Untersiggenthal (CH); Probst, Reiner, 79809 Nöggenschwiel (DE); Rechin, Thomas, 5400 Baden (CH)
(74) Vertreter: ABB Patent Attorneys

(56) Entgegenhaltungen:
- EP-A1- 1 293 681
- WO-A1-2008/023070
- DE-A- 3 641 478
- DE-A1- 19 651 318
- DE-A1-102005 028 296
- DE-U1-202004 020 559
- GB-A- 1 455 974
- US-A- 4 548 040

## Beschreibung

### Technisches Gebiet

Die Erfindung bezieht sich auf das Gebiet der Abgasturbinen, wie sie etwa in Abgasturboladern für aufgeladene Brennkraftmaschinen oder in Nutzturbinen eingesetzt werden.

Sie betrifft ein Gaseintrittsgehäuse einer Abgasturbine sowie eine Abgasturbine mit einem derartigen Gaseintrittsgehäuse.

### Stand der Technik

Die Verwendung von Abgasturboladern zur Leistungssteigerung von Brennkraftmaschinen ist heute weit verbreitet. Dabei wird die Abgasturbine des Abgasturboladers von den Abgasen der Brennkraftmaschine beaufschlagt und deren kinetische Energie zum Ansaugen und Verdichten von Luft für die Brennkraftmaschine verwendet.

DE 19651318 beschreibt eine radial angeströmte Axialturbine, bei welcher das auf die Turbine geführte Abgas im Gaseintrittsgehäuse aus der radialen in die axiale Richtung umgelenkt wird. Im Bereich der Umlenkung ist eine haubenförmige, innere Gehäusewand (Kalotte) vorgesehen, welche die Nabe des Turbinenrades abdeckt und den Abgasstrom aus der rohrförmigen Zuleitung in eine ringrohrförmige Strömung aufteilt. Die innere Gehäusewand ist mit der Leitvorrichtung (Düsenring) verbunden. Die durch die Abgasströmung auf den Düsenring wirkenden Kräfte werden dabei über die innere Gehäusewand abgeführt. Um diese Kräfte aufnehmen zu können war bisher eine entsprechende Anbindung der Kalotte über radiale verlaufende Stege unerlässlich. Bei radialen Stegen zur Befestigung der Kalotte an der Gaseintrittsgehäusewand können aufgrund der thermisch trägen Rohraussenwand des Gaseintrittsgehäuses und der thermisch dynamischer reagierenden Kalotte im Bereich der Stege hohe mechanische Spannungen auftreten, was im Extremfall zu Rissen im Übergang zwischen Steg und Gehäusewand führen kann. Zudem kann die Abgasströmung durch die in dem Strömungskanal kurz vor der Leitvorrichtung angeordneten, radial verlaufenden Rippen negativ beeinflusst werden.

### Kurze Darstellung der Erfindung

Die Aufgabe der vorliegenden Erfindung besteht darin, den Anströmbereich einer radial angeströmten Axialturbine strömungstechnisch zu optimieren, sowie die im Betrieb auf die Gehäuseteile wirkenden mechanischen Spannungen zu reduzieren.

Erfindungsgemäss wird dies erreicht, indem das innere, haubenförmige Gaseintrittsgehäuse (Kalotte) über einen oder mehrere axial angeordnete Stege, welche sich in axialer Richtung entlang der Verlängerung der Wellenachse erstrecken mit der äusseren Gehäusewand verbunden wird.

Kommt es im Betrieb zu einer thermisch bedingten Deformation der Kalotte, erfolgt diese aufgrund der axialen Erstreckung der Stege entlang der Wellenachse, wodurch sich keine asymmetrischen Belastungen für die umliegenden Bauteile, beispielweise die Leitvorrichtung (Düsenring) ergeben.

Optional ist die Verbindung zwischen der Leitvorrichtung und der Kalotte derart, dass keine Momentübertragung erfolgen kann. Beispielsweise durch eine koaxiale Führung, welche eine relative Rotationsbewegung zulässt, oder aber durch das gänzliche Fehlen eines Formschlusses, indem die Kalotte an der Leitvorrichtung lediglich verbindungslos anliegt.

Optional kann der mindestens eine Steg zwischen der Kalotte und der äusseren Gehäusewand in einem Winkel von maximal 30° zur vertikalen und/ oder horizontalen Ebene im von oben angeströmten Gaseintrittsgehäuse angeordnet sein, so dass sich die Steifigkeit der Anbindung der Kalotte erhöht.

Optional können im Bereich des mindestens einen Stegs eine oder mehrere Öffnungen für eine Waschvorrichtung vorgesehen sein. In diesem Fall kann der mindestens eine Steg optional mit einem aerodynamisch vorteilhaften Profil zur optimalen Benetzung ausgestaltet sein. Dabei soll die eingespritzte Reinigungsflüssigkeit derart von der Abgasströmung mitgetragen werden, dass der mindestens eine Steg gleichmässig von der Reinigungsflüssigkeit benetzt wird.

Optional weist die äussere Gehäusewand in der Verlängerung der Wellenachse sowie in der Verlängerung der Kreisachse durch die kreisförmige Eintrittsöffnung des Gaseintrittsgehäuses einen Befestigungsflansch auf, an welchem eine Stütze angebracht werden kann. Dies ist insbesondere bei radial angeströmten Axialturbinen mit einem höheren Druckniveau (beispielsweise Hockdruckturbolader der mehrstufigen Aufladung) vorteilhaft, da durch die Vergrösserung des Abstandes zwischen der verdichterseitigen und der turbinenseitigen Befestigung die Eigenfrequenz erhöht werden kann.

Optional ist die Stütze am Gaseintrittsgehäuse aus einem Ausdehnungswerkstoff gefertigt, welcher sich auszeichnet durch Masskonstanz über einen grossen Temperaturbereich, da er einen niedrigen Ausdehnungskoeffizienten von tiefkalten Temperaturen bis zu über 250°C aufweist.

Weitere Vorteile ergeben sich aus den abhängigen Ansprüchen.

### Kurze Beschreibung der Zeichnungen

Anschliessend sind anhand der Zeichnungen Ausführungsformen des erfindungsgemäss ausgebildeten Gaseintrittsgehäuses erläutert. Hierbei zeigt
- Fig. 1: eine Ansicht eines teilweise aufgeschnittenen Abgasturboladers gemäss dem Stand der Technik, mit einer Axialturbine mit radialem Gaseintritt und einem Radialverdichter, und
- Fig. 2: eine schematische Darstellung eines erfindungsgemäss ausgebildeten Gaseintrittsgehäuses einer Abgasturbine, wie sie etwa in Abgasturboladern gemäss Fig. 1 eingesetzt werden können.

### Weg zur Ausführung der Erfindung

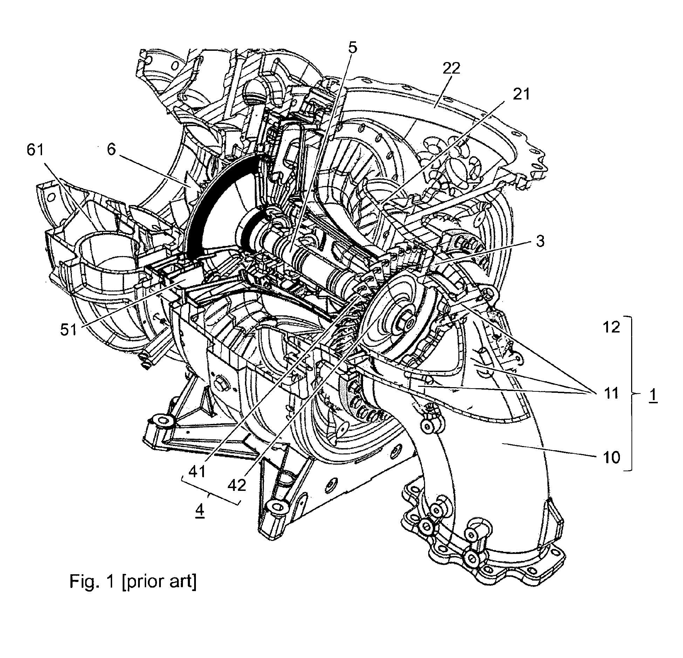

Fig 1. zeigt einen teilweise aufgeschnittenen Abgasturbolader gemäss dem Stand der Technik. Im rechten, vorderen Bereich befindet sich das Turbinenrad 4, welches über die Welle 5 mit dem Verdichterrad 6 verbunden ist. Das Verdichterrad ist in dem Verdichtergehäuse 61 angeordnet. Die Welle 5 ist im Lagergehäuse 51 gelagert.

Das Turbinenrad umfasst eine mit der Welle verbundene Nabe 42 sowie eine Vielzahl von Laufschaufeln 41, welche mit der Nabe verbunden sind. Die Laufschaufeln können form- oder kraftschlüssig mit der Nabe verbunden sein. Alternativ kann das Turbinenrad samt Nabe und Laufschaufeln einteilig ausgebildet sein.

Das Turbinengehäuse umfasst ein Gaseintrittsgehäuse 1, welches das heisse Abgas aus den Brennkammern der Brennkraftmaschine über die Leitvorrichtung 3 auf die Laufschaufeln des Turbinenrades leitet. Stromabwärts des Turbinenrads durchströmt das Abgas einen Diffusor 21 und wird anschliessend im Gasaustrittsgehäuse 22 gesammelt und zur Auspuffanlage geführt.

Das Gaseintrittsgehäuse 1 einer Axialturbine umfasst eine äussere Gehäusewand 10, welche den Strömungskanal radial aussen umfasst. Zusätzlich umfasst das Gaseintrittsgehäuse 1 im inneren Bereich eine haubenförmige, innere Gehäusewand 12, welche die Nabe des Turbinenrades abdeckt und den Abgasstrom aus der rohrförmigen Zuleitung in eine ringrohrförmige Strömung aufteilt. Die äussere Gehäusewand bildet im Übergangsbereich zum Turbineneintritt eine kreisförmige Austrittsöffnung. Zusammen mit der koaxial angeordneten, kreisförmigen Grundflächenaussenkontur der inneren Gehäusewand wird so der ringrohrförmige Strömungskanal begrenzt.

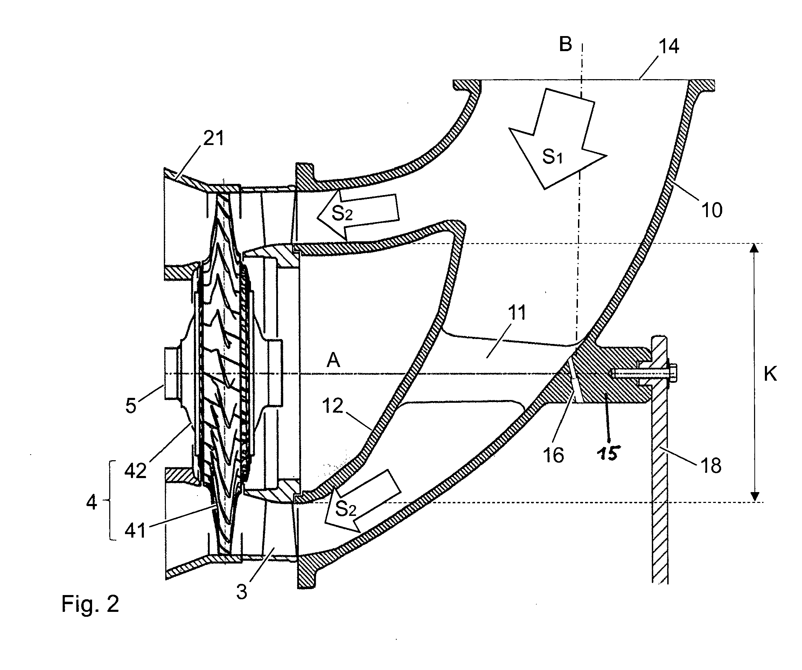

Fig. 2 zeigt einen entlang der Wellenachse geführten Schnitt durch eine Abgasturbine mit einem erfindungsgemäss ausgebildeten Gaseintrittsgehäuse. Die äussere Gehäusewand 10 ist rohrförmig ausgebildet. Bei der dargestellten radial angeströmten Axialturbine hat das Gaseintrittsgehäuse die Funktion, die Abgasströmung aus einer von der axialen Richtung abweichenden Richtung - im vorliegenden Fall aus der radialen Richtung B - in die axiale Richtung umzuleiten und zudem die rohrförmige Strömung S₁ in eine ringrohrförmige Strömung S₂ aufzuteilen.

Für sich alleine betrachtet weist die äussere Gehäusewand 10 im Übergangsbereich zum Turbineneintritt eine kreisförmige Austrittsöffnung auf. Die Gerade, welche senkrecht zur Kreisfläche der kreisförmigen Austrittsöffnung steht und durch deren Mittelpunkt geht, wird fortan als Achse A bezeichnet. Die Begriffe axial und radial beziehen sich demnach auf diese Achse A. Die Achse A entspricht der Wellenachse der mit dem Turbinenrad verbundenen Welle. Koaxial bezüglich der Achse A ist im Innern der äusseren Gehäusewand 10 die haubenförmige, innere Gehäusewand 12 angeordnet. Im Bereich der Austrittsöffnung der äusseren Wand 10 weist die innere Gehäusewand 12 eine ebenfalls kreisförmige Grundflächenaussenkontur auf. Stromaufwärts hingegen verjüngt sich die innere Gehäusewand zu einem abgerundeten Spitz oder einer Kuppe. In diesem Bereich geht der rohrförmige Strömungskanal in einen ringrohrförmigen Strömungskanal über.

Während dem Betrieb der Abgasturbine werden die vor der Brennkraftmaschine kommenden, heissen Abgase zunächst in einem im Querschnitt zumindest annähernd kreisförmigen Abgasstrom S₁ in das Gaseintrittsgehäuse der Axialturbine eingeleitet. Durch die Wirkung der inneren Gehäusewand 12 (Kalotte) erfolgt eine Umwandlung in einen ringförmigen Abgasstrom S₂. Der nunmehr ringförmige Abgasstrom wird über den Strömungskanal zum Turbinenrad 4 weitergeleitet. Dabei hat die stromauf der Laufschaufeln 41 des Turbinenrades angeordnete Leitvorrichtung (Düsenring) 3 die Aufgabe, die Abgase optimal auf die Laufschaufeln 41 des Turbinenrades 4 auszurichten. Das somit angetriebene Turbinenrad sorgt seinerseits über die Welle 5 für den Antrieb des mit ihm verbundenen, nicht dargestellten Verdichters - oder, im Falle einer Nutzturbinenanwendung, einer nicht dargestellten Nutzmaschine, beispielsweise einem elektrischen Generator.

Die innere Gehäusewand 12 ist erfindungsgemäss über einen, zwei oder mehrere axial angeordnete Stege 11 mit der äusseren Gehäusewand 10 verbunden. Der Steg oder die Stege erstrecken sich dabei in der Verlängerung der Wellenachse A oder parallel dazu. Der mindestens eine Steg verbindet die innere Gehäusewand 12 mit der äusseren Gehäusewand 10, wobei die beiden Stellen, an welchen der Steg auf der jeweiligen Gehäusewand befestigt ist, sich in axialer Richtung gegenüberliegen, so dass sich deren axiale Projektionen grösstenteils überlappen. Im Falle einer streng axialen Ausrichtung überlappen die axialen Projektionen vollständig, bei geringfügiger Abweichung ergibt sich immer noch eine Überlappung von über 50%. In der dargestellten Ausführungsform verläuft der mindestens eine Steg - ohne fertigungs- oder strömungstechnisch bedingte Verrundungen am Übergang zwischen Steg und Gehäusewand zu berücksichtigen - innerhalb einer axialen Parallel-Projektion K der kreisförmigen Grundflächenaussenkontur der inneren Gehäusewand, oder zumindest innerhalb einer axialen, kegelförmigen Projektion der kreisförmigen Grundflächenaussenkontur der inneren Gehäusewand wobei der Winkel der Kegelöffnung zur Achse maximal 10° beträgt. Daraus ergibt sich eine vorwiegend axiale Erstreckung des mindestens einen Stegs, was im transienten Betrieb eine thermisch bedingte Dehnung des Stegs in axialer Richtung sowie eine entsprechende Verschiebung der inneren Gehäusewand in axialer Richtung zur Folge hat.

Um die Steifigkeit der Anbindung der Kalotte zu erhöhen, können die Stege in einem Winkel bis zu 30° zur axialen Vertikalebene und/ oder der axialen Horizontalebene ausgerichtet sein. Die axiale Vertikalebene erstreckt sich in die axiale Richtung A einerseits und in die Richtung B aus der das Abgas in das Gaseintrittsgehäuse eingeführt wird andererseits. Im dargestellten Beispiel mit einem aus der radialen Richtung von oben angeströmten Gaseintrittsgehäuse, verläuft die axiale Vertikalebene in der dargestellten Schnittebene. Die axiale Horizontalebene erstreckt sich in die axiale Richtung A einerseits und senkrecht zur Richtung B aus der das Abgas in das Gaseintrittsgehäuse eingeführt wird andererseits. Im dargestellten Beispiel mit einem aus der radialen Richtung von oben angeströmten Gaseintrittsgehäuse, verläuft die axiale Horizontalebene entlang der Achse A und senkrecht zur dargestellten Schnittebene.

Die Stege weisen grundsätzlich ein aerodynamisch vorteilhaftes Profil auf, um den Strömungsverlauf so wenig wie möglich zu beeinträchtigen.

Im Bereich des mindestens einen Stegs können eine oder mehrere Öffnungen 16 für eine Waschvorrichtung vorgesehen sein. In diesem Fall kann der mindestens eine Steg optional mit einem aerodynamisch vorteilhaften Profil zur optimalen Benetzung ausgestaltet sein. Dabei soll die eingespritzte Reinigungsflüssigkeit derart von der Abgasströmung mitgetragen werden, dass der mindestens eine Steg gleichmässig von der Reinigungsflüssigkeit benetzt wird.

Optional ist die Verbindung zwischen der Leitvorrichtung 3 und der inneren Gehäusewand 12 derart ausgestaltet, dass keine Momentübertragung erfolgen kann. Beispielsweise durch eine koaxiale Führung, welche eine relative Rotationsbewegung zulässt, oder aber durch das gänzliche Fehlen eines Formschlusses, indem die Kalotte an der Leitvorrichtung lediglich verbindungslos anliegt.

In der dargestellten Ausführungsform weist die äussere Gehäusewand 10 in der Verlängerung der Achse A und demnach in dem Bereich, in welchem der mindestens eine Steg 11 in die äussere Gehäusewand übergeht, einen Befestigungsflansch 15 auf, an welchem eine Stütze 18 angebracht werden kann. Der Befestigungsflansch 15 ist in der Verlängerung des mindestens einen Stegs 11 angeordnet. Die Abstützung in der Verlängerung der Wellenachse erlaubt ein freies Drehen des Gaseintrittsgehäuses, um die Gaseintrittsöffnung entsprechend der Anschlussrohre ausrichten zu können. Zudem ist der Befestigungsflansch erfindungsgemäss im Schnittbereich der Kreisachse B der kreisförmigen Eintrittsöffnung 14 in der äusseren Gehäusewand mit der äusseren Gehäusewand angeordnet. Diese Art der Abstützung ermöglicht eine effektive Aufnahme der hohen Gaskräfte, welche durch die Umlenkung des Abgasstroms verursacht werden und welche in Richtung der Kreisachse B auf das Gaseintrittsgehäuse wirken.

Durch die Abstützung am Gaseintrittsgehäuse wird die Stütze 18 allerdings einer höheren Temperatur ausgesetzt als beispielsweise die Stütze am verdichterseitigen Ende des Abgasturboladers. Um einer temperaturbedingten höheren Ausdehnung entgegenzuwirken, wird die Stütze idealerweise aus einem Ausdehnungswerkstoff gefertigt. Wie oben erwähnt, weisen Ausdehnungswerkstoffe einen niedrigen Ausdehnungskoeffizienten von tiefkalten Temperaturen bis zu über 250°C auf, so dass eine Masskonstanz über einen grossen Temperaturbereich resultiert. Als ein Beispiel eines derartigen Ausdehnungswerkstoffs sei hier Alloy 36 genannt. Die Wahl eines derartigen Werkstoffs erübrigt konstruktive Gegenmassnahmen wie ein vergrössertes Spiel oder das Zulassen einer relativen Rutschbewegung zwischen den Gehäuseverbindungen.
- 1: Gaseintrittsgehäuse
- 10: äussere Gehäusewand
- 11: Steg
- 12: innere Gehäusewand (Kalotte)
- 14: Eintrittsöffnung der äusseren Gehäusewand
- 15: Befestigungsflansch
- 16: Öffnung für Reinigungsdüse
- 18: Stütze
- 21: Diffusor
- 22: Gasaustrittsgehäuse
- 3: Leitvorrichtung
- 4: Turbinenrad
- 41: Laufschaufeln
- 42: Nabe
- 5: Welle
- 51: Lagergehäuse
- 6: Verdichterrad
- 61: Verdichtergehäuse
- A: Kreisachse der kreisförmigen Austrittsöffnung der äusseren Gehäusewand
- B: Kreisachse der kreisförmigen Eintrittsöffnung der äusseren Gehäusewand
- K: kreisförmigen Grundflächenaussenkontur der inneren Gehäusewand
- S₁, S₂: Abgasstrom

## Patentansprüche

1. Gaseintrittsgehäuse einer Abgasturbine, umfassend eine rohrförmige äussere Gehäusewand (10) mit einer kreisförmigen Austrittsöffnung, sowie eine innerhalb der äusseren Gehäusewand angeordnete, haubenförmige, innere Gehäusewand (12) mit einer kreisförmigen Grundflächenaussenkontur, wobei die innere Gehäusewand (12) mit der kreisförmigen Grundflächenaussenkontur (K) im Bereich der kreisförmigen Austrittsöffnung der äusseren Gehäusewand (10) konzentrisch zu dieser kreisförmigen Austrittsöffnung der äusseren Gehäusewand (10) angeordnet ist und mit mindestens einem Steg (11) an der äusseren Gehäusewand befestigt ist;
wobei ein durch die äussere Gehäusewand begrenzter Strömungskanal entlang der inneren Gehäusewand (12) von der Rohrform in die Ringrohrform übergeht;
wobei die äussere Gehäusewand derart gebogen ausgebildet ist, dass der durch die äussere Gehäusewand begrenzte Strömungskanal eine Umlenkung aus einer von der axialen Richtung der Kreisachse (A) der kreisförmigen Austrittsöffnung abweichenden, ersten Richtung in die axiale Richtung erfährt,
**dadurch gekennzeichnet, dass**
der mindestens eine Steg (11) in axialer Richtung verläuft und an der inneren Gehäusewand (12) und an der äusseren Gehäusewand (10) an sich in axialer Richtung gegenüberliegenden Stellen befestigt ist.

2. Gaseintrittsgehäuse einer Abgasturbine nach Anspruch 1, wobei sich die beiden Stellen der Befestigung an der inneren Gehäusewand (12) und an der äusseren Gehäusewand (10) derart axial gegenüberliegen, dass sich deren axiale Projektionen zwischen 50% und 100% überlappen.

3. Gaseintrittsgehäuse einer Abgasturbine nach Anspruch 1, wobei der mindestens eine Steg (11) eine Abweichung von einer axialen Vertikalebene von maximal 30° aufweist, wobei sich die axiale Vertikalebene in die axiale Richtung sowie die erste Richtung erstreckt.

4. Gaseintrittsgehäuse einer Abgasturbine nach Anspruch 1, wobei der mindestens eine Steg (11) eine maximale Abweichung von einer axialen Horizontalebene von 30° aufweist, wobei sich die axiale Horizontalebene in die axiale Richtung sowie senkrecht zur ersten Richtung erstreckt.

5. Gaseintrittsgehäuse einer Abgasturbine nach Anspruch 1, wobei die innere Gehäusewand (12) im Bereich der kreisförmigen Austrittsöffnung der äusseren Gehäusewand (10) eine kreisförmige Aussenkontur aufweist, und dass der mindestens eine Steg innerhalb einer axialen Kegel-Projektion der kreisförmigen Grundflächenaussenkontur (K) der inneren Gehäusewand (12) verläuft, wobei der Kegelöffnungswinkel zur Achse maximal 10° beträgt.

6. Gaseintrittsgehäuse einer Abgasturbine nach Anspruch 5, wobei die innere Gehäusewand (12) im Bereich der kreisförmigen Austrittsöffnung der äusseren Gehäusewand (10) eine kreisförmige Aussenkontur aufweist, und dass der mindestens eine Steg innerhalb einer axialen Parallel-Projektion der kreisförmigen Grundflächenaussenkontur (K) der inneren Gehäusewand (12) verläuft.

7. Gaseintrittsgehäuse einer Abgasturbine nach einem der Ansprüche 1 bis 6, wobei im Bereich des mindestens einen Stegs (11) mindestens eine Öffnung (16) zum Einspritzen einer Reinigungsflüssigkeit in die äussere Gehäusewand (10) eingelassen ist.

8. Gaseintrittsgehäuse einer Abgasturbine nach einem der Ansprüche 1 bis 7, wobei die äussere Gehäusewand in der Verlängerung der Achse (A) durch die kreisförmige Austrittsöffnung einen Befestigungsflansch (15) mit Befestigungsmitteln zum Befestigen des Gaseintrittsgehäuses an einer Stütze umfasst.

9. Gaseintrittsgehäuse einer Abgasturbine nach Anspruch 8, wobei der Befestigungsflansch (15) an der Stelle mit der äusseren Gehäusewand verbunden ist, an welcher der mindestens eine Steg (11) mit der äusseren Gehäusewand (10) verbunden ist.

10. Gaseintrittsgehäuse einer Abgasturbine nach Anspruch 9, wobei die äussere Gehäusewand (10) eine kreisförmige Eintrittsöffnung (14) aufweist, und der Befestigungsflansch (15) an der Stelle mit der äusseren Gehäusewand verbunden ist, an welcher die Kreisachse (B) der kreisförmigen Eintrittsöffnung die äussere Gehäusewand (10) schneidet.

11. Gaseintrittsgehäuse einer Abgasturbine nach einem der Ansprüche 8 bis 10, wobei die Befestigungsmittel axial von der äusseren Gehäusewand beabstandet sind.

12. Gaseintrittsgehäuse einer Abgasturbine nach einem der Ansprüche 8 bis 11, umfassend eine Stütze (18), welche mittels der Befestigungsmittel am Befestigungsflansch (15) der äusseren Gehäusewand befestigt ist.

13. Gaseintrittsgehäuse einer Abgasturbine nach Anspruch 12, wobei die Stütze (18) einen Ausdehnungswerkstoff umfasst, welcher einen tiefen Ausdehnungskoeffizienten über einen grossen Temperaturbereich aufweist.

14. Abgasturbine, umfassend ein Gaseintrittsgehäuse nach einem der vorangehenden Ansprüche.

## Claims

1. Gas entry housing of an exhaust gas turbine, comprising a tubular outer housing wall (10) with a circular outlet opening and, arranged inside the outer housing wall, a shroud-shaped inner housing wall (12) with a circular base surface outer contour, wherein the inner housing wall (12) with the circular base surface outer contour (K) is arranged in the region of the circular outlet opening of the outer housing wall (10), concentrically with this circular outlet opening of the outer housing wall (10), and is attached to the outer housing wall by means of at least one stay (11);
wherein a flow duct delimited by the outer housing wall transitions, along the inner housing wall (12), from the tubular shape into the annular tubular shape;
wherein the outer housing wall is curved such that the flow duct delimited by the outer housing wall is redirected from a first direction, which deviates from the axial direction of the axis (A) of the circle of the circular outlet opening, to the axial direction,
**characterized in that**
the at least one stay (11) runs in the axial direction and is attached to the inner housing wall (12) and to the outer housing wall (10) at points which lie opposite each other in the axial direction.

2. Gas entry housing of an exhaust gas turbine according to Claim 1, wherein the two attachment points on the inner housing wall (12) and on the outer housing wall (10) lie opposite each other in the axial direction such that their axial projections overlap by between 50% and 100%.

3. Gas entry housing of an exhaust gas turbine according to Claim 1, wherein the at least one stay (11) deviates from an axial vertical plane by at most 30°, wherein the axial vertical plane extends in the axial direction and in the first direction.

4. Gas entry housing of an exhaust gas turbine according to Claim 1, wherein the at least one stay (11) deviates from an axial horizontal plane by at most 30°, wherein the axial horizontal plane extends in the axial direction and perpendicular to the first direction.

5. Gas entry housing of an exhaust gas turbine according to Claim 1, wherein the outer contour of the inner housing wall (12) is circular in the region of the circular outlet opening of the outer housing wall (10), and in that the at least one stay runs within an axial conical projection of the circular base surface outer contour (K) of the inner housing wall (12), wherein the cone opening angle with respect to the axis is at most 10°.

6. Gas entry housing of an exhaust gas turbine according to Claim 5, wherein the outer contour of the inner housing wall (12) is circular in the region of the circular outlet opening of the outer housing wall (10), and in that the at least one stay runs within an axial parallel projection of the circular base surface outer contour (K) of the inner housing wall (12).

7. Gas entry housing of an exhaust gas turbine according to one of Claims 1 to 6, wherein at least one opening (16) for injecting a cleaning fluid is created in the outer housing wall (10), in the region of the at least one stay (11).

8. Gas entry housing of an exhaust gas turbine according to one of Claims 1 to 7, wherein the outer housing wall comprises, in the continuation of the axis (A) through the circular outlet opening, an attachment flange (15) with attachment means for attaching the gas entry housing to a support.

9. Gas entry housing of an exhaust gas turbine according to Claim 8, wherein the attachment flange (15) is connected to the outer housing wall at that point at which the at least one stay (11) is connected to the outer housing wall (10).

10. Gas entry housing of an exhaust gas turbine according to Claim 9, wherein the outer housing wall (10) comprises a circular entry opening (14) and the attachment flange (15) is connected to the outer housing wall at that point at which the axis (B) of the circle of the circular entry opening intersects the outer housing wall (10).

11. Gas entry housing of an exhaust gas turbine according to one of Claims 8 to 10, wherein the attachment means are spaced apart axially from the outer housing wall.

12. Gas entry housing of an exhaust gas turbine according to one of Claims 8 to 11, comprising a support (18) which is attached by means of the attachment means on the attachment flange (15) of the outer housing wall.

13. Gas entry housing of an exhaust gas turbine according to Claim 12, wherein the support (18) comprises an expansion material having a low coefficient of expansion over a broad temperature range.

14. Exhaust gas turbine comprising a gas entry housing according to one of the preceding claims.

## Revendications

1. Carter d'entrée de gaz d'une turbine à gaz d'échappement, comportant une paroi de carter extérieure tubulaire (10) comprenant une ouverture de sortie circulaire, ainsi qu'une paroi de carter intérieure (12) en forme de calotte, disposée à l'intérieur de la paroi de carter extérieure, présentant un contour extérieur de surface de base circulaire, la paroi de carter intérieure (12) présentant le contour extérieur de surface de base circulaire (K) étant disposée dans la région de l'ouverture de sortie circulaire de la paroi de carter extérieure (10) de manière concentrique à cette ouverture de sortie circulaire de la paroi de carter extérieure (10) et étant fixée à la paroi de carter extérieure par au moins un élément de liaison (11) ;
un canal d'écoulement délimité par la paroi de carter extérieure se prolongeant le long de la paroi de carter intérieure (12) de la forme tubulaire à la forme de tube annulaire ;
la paroi de carter extérieure étant courbée de telle sorte que le canal d'écoulement délimité par la paroi de carter extérieure subisse une déviation d'une première direction s'écartant de la direction axiale de l'axe de cercle (A) de l'ouverture de sortie circulaire à la direction axiale,
**caractérisé en ce que**
l'au moins un élément de liaison (11) s'étend dans la direction axiale et est fixé à la paroi de carter intérieure (12) et à la paroi de carter extérieure (10) en des points en regard dans la direction axiale.

2. Carter d'entrée de gaz d'une turbine à gaz d'échappement selon la revendication 1, dans lequel les deux points de fixation à la paroi de carter intérieure (12) et à la paroi de carter extérieure (10) sont en regard axialement de telle sorte que leurs projections axiales se chevauchent à entre 50 % et 100 %.

3. Carter d'entrée de gaz d'une turbine à gaz d'échappement selon la revendication 1, dans lequel l'au moins un élément de liaison (11) présente un écart par rapport à un plan vertical axial d'au maximum 30°, et dans lequel le plan vertical axial s'étend dans la direction axiale ainsi que dans la première direction.

4. Carter d'entrée de gaz d'une turbine à gaz d'échappement selon la revendication 1, dans lequel l'au moins un élément de liaison (11) présente un écart maximal de 30° par rapport à un plan horizontal axial, et dans lequel le plan horizontal axial s'étend dans la direction axiale ainsi que perpendiculairement à la première direction.

5. Carter d'entrée de gaz d'une turbine à gaz d'échappement selon la revendication 1, dans lequel la paroi de carter intérieure (12) présente un contour extérieur circulaire dans la région de l'ouverture de sortie circulaire de la paroi de carter extérieure (10), et en ce que l'au moins un élément de liaison s'étend à l'intérieur d'une projection conique axiale du contour extérieur de surface de base circulaire (K) de la paroi de carter intérieure (12), et dans lequel l'angle d'ouverture de cône par rapport à l'axe vaut au maximum 10°.

6. Carter d'entrée de gaz d'une turbine à gaz d'échappement selon la revendication 5, dans lequel la paroi de carter intérieure (12) présente un contour extérieur circulaire dans la région de l'ouverture de sortie circulaire de la paroi de carter extérieure (10), et en ce que l'au moins un élément de liaison s'étend à l'intérieur d'une projection parallèle axiale du contour extérieur de surface de base circulaire (K) de la paroi de carter intérieure (12).

7. Carter d'entrée de gaz d'une turbine à gaz d'échappement selon l'une quelconque des revendications 1 à 6, dans lequel au moins une ouverture (16) d'injection d'un liquide de nettoyage est intégrée dans la paroi de carter extérieure (10) dans la région de l'au moins un élément de liaison (11).

8. Carter d'entrée de gaz d'une turbine à gaz d'échappement selon l'une quelconque des revendications 1 à 7, dans lequel la paroi de carter extérieure comporte, dans le prolongement de l'axe (A) à travers l'ouverture de sortie circulaire, une bride de fixation (15) pourvue de moyens de fixation en vue de la fixation du carter d'entrée de gaz à un support.

9. Carter d'entrée de gaz d'une turbine à gaz d'échappement selon la revendication 8, dans lequel la bride de fixation (15) est reliée à la paroi de carter extérieure au point auquel l'au moins un élément de liaison (11) est relié à la paroi de carter extérieure (10).

10. Carter d'entrée de gaz d'une turbine à gaz d'échappement selon la revendication 9, dans lequel la paroi de carter extérieure (10) comprend une ouverture d'entrée circulaire (14), et la bride de fixation (15) est reliée à la paroi de carter extérieure au point auquel l'axe de cercle (B) de l'ouverture d'entrée circulaire coupe la paroi de carter extérieure (10).

11. Carter d'entrée de gaz d'une turbine à gaz d'échappement selon l'une quelconque des revendications 8 à 10, dans lequel les moyens de fixation sont espacés axialement de la paroi de carter extérieure.

12. Carter d'entrée de gaz d'une turbine à gaz d'échappement selon l'une quelconque des revendications 8 à 11, comportant un support (18), lequel est fixé à la bride de fixation (15) de la paroi de carter extérieure à l'aide des moyens de fixation.

13. Carter d'entrée de gaz d'une turbine à gaz d'échappement selon la revendication 12, dans lequel le support (18) comporte un matériau de dilatation, lequel présente un coefficient de dilatation bas sur une large plage de températures.

14. Turbine à gaz d'échappement, comportant un carter d'entrée de gaz selon l'une quelconque des revendications précédentes.
